Europäisches Patentamt

European Patent Office

Office européen des brevets

(11) Veröffentlichungsnummer : **0 147 579**
**B1**

(12) **EUROPÄISCHE PATENTSCHRIFT**

(45) Veröffentlichungstag der Patentschrift :
09.09.87

(21) Anmeldenummer : 84113397.8

(22) Anmeldetag : 07.11.84

(51) Int. Cl.⁴ : **G 01 K   1/08**

(54) **Schutzhülse für Temperaturfühler.**

(30) Priorität : 11.11.83 DE 8332493 U

(43) Veröffentlichungstag der Anmeldung :
**10.07.85 Patentblatt 85/28**

(45) Bekanntmachung des Hinweises auf die Patenterteilung : **09.09.87 Patentblatt 87/37**

(84) Benannte Vertragsstaaten :
**DE GB IT NL**

(56) Entgegenhaltungen :
**DE-A- 1 294 703
DE-A- 1 928 804
DE-A- 3 127 256
US-A- 1 869 151
US-A- 2 707 584
US-A- 3 816 183
US-A- 4 396 792**

(73) Patentinhaber : **HONEYWELL B.V.
Rijswijkstraat 175
NL-1062 EV Amsterdam (NL)**

(72) Erfinder : **Capel, Denis
Laan van het Kwekebos 7
NL-7823 KA Emmen (NL)**

(74) Vertreter : **Rentzsch, Heinz et al
Honeywell Europe S.A. Holding KG Patent- und Lizenzabteilung Kaiserleistrasse 55
D-6050 Offenbach am Main (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

## Beschreibung

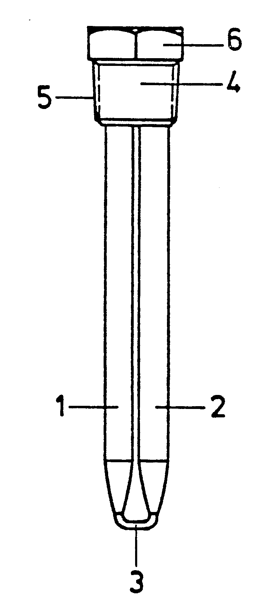

Die Erfindung bezieht sich auf eine Eintauch-Schutzhülse für zwei rohrförmige Temperaturfühler, beispielsweise mit einer Ausdehnungsflüssigkeit gefüllte Kapillarrohr-Temperaturfühler. Zur Temperaturregelung finden vielfach sogenannte Doppeltemperaturfühler Anwendung, bei denen in einer gemeinsamen Schutzhülse zwei getrennte Temperaturmeßfühler untergebracht sind, von denen der eine zur Temperaturregelung und der andere zur Sicherheits-Temperaturbegrenzung dient. Wichtig ist dabei, daß beide Temperaturfühler in gutem Wärmekontakt mit der sie umgebenden Hülse stehen und möglichst wenig Platz beanspruchen. Hierfür ist aus DE-U-17 98 471 eine rohrfürmige Schutzhülse bekannt, in welche zwei Temperaturfühler von halbkreisförmigem Querschnitt eingesetzt sind. Eine solche Form der Temperaturfühler ist fertigungstechnisch schwieriger herzustellen als glatte rohrförmige Temperaturfühler. Aus Figur 3 der DE-A-19 28 802 ist ein Doppeltemperaturfühler bekannt, dessen Schutzhülse einen etwa achtförmigen Querschnitt hat, in den zwei rohrförmige Temperaturfühler eingesetzt werden. Hier finden zwar rohrförmige und somit leicht herstellbare Temperaturfühler Anwendung, jedoch ist die Herstellung der Schutzhülse aufwendiger. Weiterhin zeigen die Figuren 2, 4 und 5 der DE-A-19 28 804 einen U-förmig gebogenen Temperaturfühler, welcher zusammen mit zwei weiteren Temperaturfühlern in eine im Querschnitt aus mehreren Bogenstücken zusammengesetzte Schutzhülse eingesetzt wird. Auch hier ist die Herstellung der Schutzhülse aufwendig.

Aus US-A-43 96 792, in Verbindung mit US-A-38 16 183, ist ein wiederverwendbarer Temperturmeßkopf zur Temperaturmessung in Metallschmelzen bekannt, bei dem ein Thermoelement mit einer enden U-förmig gebogenen Schutzhülse umgeben ist, die mit ihren freien Schenkelenden in einen Isolierstoffsockel eingesetzt ist. Bei diesem Meßkopf ragt die U-förmig gestaltete Verbindungsstelle der beiden Schenkel aus einer den Sockel umgebenden kuppelförmigen Isolierkappe heraus.

In US-A-27 07 584 wird ein mit einer Ausdehnungsflüssigkeit gefüllter Kapillarrohr-Temperaturfühler an seinem einen Ende dadurch verschlossen, daß das Kapillarrohr zwischen zwei sich gegenüberstehenden Backen zusammengequetscht und anschließend durch zwei sich rechtwinkelig zu den genannten Backen aufeinander zubewegende Kanten abgedrückt und hierdurch eine Kaltverschweißung des so erzeugten Rohrendes herbeigeführt wird.

Ausgehend von einer Schutzhülse gemäß DE-A-19 28 804 besteht die Aufgabe der vorliegenden Erfindung darin, eine Eintauch-Schutzhülse für Doppeltemperaturfühler zu schaffen, welche einfach herzustellen ist, einen guten Wärmeübergang zwischen Schutzhülse und Temperaturfühler gewährleistet und auch mechanisch stabil aufgebaut ist.

Diese Aufgabe wird gelöst durch die im Patentanspruch beschriebene Erfindung.

Ausgangsmaterial für eine solche Schutzhülse ist ein glattes gut wärmeleitendes Rohr, beispielsweise Kupferrohr, welches in der Mitte zwischen zwei Backen eingespannt und dabei flach gedrückt und außerhalb der Einspannung rechtwinklig zu einer U-Form abgebogen wird. Die freien Enden werden, wie üblich, durch Hartlöten oder Schweißen in einem Gewindesockel befestigt. Beide Fühler liegen in voller Länge mit ihrer Mantelfläche an der Innenwand des Schutzhülsenrohres an, wodurch ein guter Wärmekontakt gewährleistet ist. Gegebenenfalls kann durch Einlegen einer langgestreckten Bandfeder der Kontakt zwischen Temperaturfühler und Schutzhülse noch verbessert werden. Dies empfiehlt sich in bekannter Weise (DE-U-19 55 665) insbesondere dann, wenn der Außendurchmesser des Temperaturfühlers geringer ist als der Innendurchmesser der Schutzhülse. Für eine gute Wärmeübertragung ist ferner von Bedeutung, daß beide Temperaturfühler über ihre gesamte Länge und ihren gesamten Umfang vom zu überwachendem Medium umspült sind. Die Herstellung der Schutzhülse ist denkbar einfach.

Eine vorteilhafte Ausführungsform der neuen Schutzhülse wird nachfolgend anhand der Zeichnung beschrieben. Sie zeigt die Schutzhülse in seitlicher Ansicht.

Die Schutzhülse besteht aus zwei rohrfürmigen Schenkeln 1 und 2, die durch einen flachen Verbindungssteg 3 mechanisch und thermisch miteinander verbunden sind. Die freien Enden der beiden Schenkel 1 und 2 sind in einen Gewindesockel 4 eingelötet, z. B. hartverlötet, der außer einem Einschraubgewinde 5 einen Sechskantansatz 6 für ein Einschraubwerkzeug aufweist.

Ausgehend von einem geraden Kupferrohr von etwas mehr als der Gesamtlänge der beiden Schenkel 1 und 2, wird dieses Rohr in der Mitte im Bereich des Verbindungssteges 3 zwischen zwei Backen eingespannt und flachgedrückt. Anschließend werden die beiden Schenkel 1 und 2 zu der dargestellten U-Form rechtwinklig in Bezug auf den Verbindungssteg 3 abgebogen und mit ihren freien Enden in den Gewindesockel 4 eingesetzt und darin befestigt. Der flachgedrückte Verbindungssteg 3 sorgt für eine gute mechanische Stabilität der Doppel-Tauchhülse insbesondere dann, wenn diese in strömende Medien eintaucht. Von der Seite des Sechskants 6 her, werden nach Einschrauben des Sockels 4, beispielsweise in eine Kesselwand, die beiden Kapillarrohr-Temperaturfühler in die beiden Schenkel 1 und 2 der Schutzhülse eingeschoben. Durch die rohrförmige Gestalt der Temperaturfühler und die dargestellte Form der Schutzhülse wird der Fertigungsaufwand für beide Teile des Doppeltemperaturfühlers auf ein Minimum reduziert. Die Herstellung der Schutzhülse aus einem einzigen Rohr vermeidet jegliche Abdichtungsprobleme am Eintauchende der Schutzhülse. Diese braucht dort weder verlötet, verschweißt oder anderweit abgedichtet zu werden sondern ist ohnehin dicht verschlossen. .

**Patentanspruch**

Mit ihrem offenen Ende in einem Gewindesockel (4) gehaltene Eintauch-Schutzhülse für zwei rohrförmige Temperaturfühler, die zur Erzielung eines guten Wärmekontakts hinsichtlich ihres Innendurchmessers dem Durchmesser der Temperaturfühler angepaßt ist, dadurch gekennzeichnet, daß die Schutzhülse durch ein U-förmig gebogenes Rohr (1, 2, 3) gebildet ist, dessen freie Schenkelenden im Sockel (4) gehalten sind und dessen dem Sockel (4) abgewandter Verbindungssteg (3) durch einen flachgedrückten und rechtwinklig zu den Schenkeln (1, 2) abgewinkelten Teil des Rohrs (1, 2, 3) gebildet ist.

**Claim**

Insertion protective shell for two tube-like temperature sensors, which shell with its open end is mounted in a threaded plug (4) and which has an internal diameter adapted to the diameter of the temperature sensors for achieving good thermal contact, characterized in that the protective shell is formed by a U-like shaped tube (1, 2, 3) having the free ends of both legs held in the plug (4) and whereat the connecting traverse (3) provided at the ends of the legs (1, 2) opposite the plug (4) is formed by a flatly squeezed portion of the tube (1, 2, 3) which is bent rectangularily with respect to the legs (1, 2).

**Revendication**

Gaine de protection immergeable pour deux capteurs de température tubulaires, qui est maintenue par son extrémité ouverte dans un socle taraudé (4) et est adaptée pour établir un bon contact thermique entre son pourtour intérieur et le pourtour des capteurs de température, caractérisée en ce que la gaine de protection est formée par un tube (1, 2, 3) replié en forme de U, dont les extrémités libres des branches sont maintenues dans le socle (4) et dont la barrette de liaison (3), située à l'opposé du socle (4), est formée par une partie du tube (1, 2, 3), qui est aplatie et est coudée perpendiculairement aux branches (1, 2).